(19) Europäisches Patentamt
European Patent Office
Office européen des brevets

(11) Veröffentlichungsnummer: **0 199 056 B1**

# (12) EUROPÄISCHE PATENTSCHRIFT

(45) Veröffentlichungstag der Patentschrift: **22.05.91**

(51) Int. Cl.[5]: **C09B 19/02**

(21) Anmeldenummer: **86103309.0**

(22) Anmeldetag: **12.03.86**

## (54) Verfahren zur Herstellung von Triphendioxazinen.

(30) Priorität: **23.03.85 DE 3510613**

(43) Veröffentlichungstag der Anmeldung:
**29.10.86 Patentblatt 86/44**

(45) Bekanntmachung des Hinweises auf die Patenterteilung:
**22.05.91 Patentblatt 91/21**

(84) Benannte Vertragsstaaten:
**CH DE FR GB LI**

(56) Entgegenhaltungen:
**FR-A- 898 585**

(73) Patentinhaber: **BAYER AG**

**W-5090 Leverkusen 1 Bayerwerk(DE)**

(72) Erfinder: **Dürscheid, Heinrich**
**Charlottenburger Strasse 56**
**W-5090 Leverkusen(DE)**
Erfinder: **Harms, Wolfgang, Dr.**
**Walter-Flex-Strasse 21**
**W-5090 Leverkusen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 199 056 B1

## Beschreibung

Gegenstand der Erfindung ist ein verbessertes Verfahren zur Herstellung von Triphendioxazinen (II) durch oxidativen Ringschluß von 2,5-Diarylamino-3,6-dihalogen-1,4-benzochinonen der Formel (I)

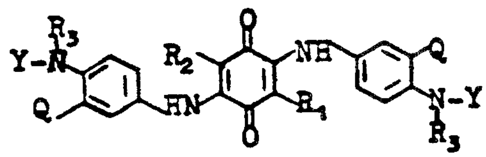

(I)

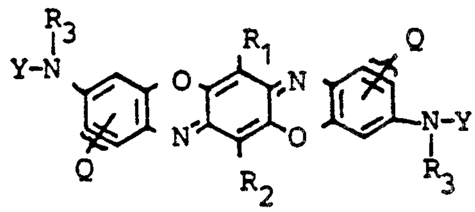

(II)

worin

- $R_1$, $R_2$ = H, Halogen, gegebenenfalls substituiertes $C_1$-$C_4$-Alkyl, NH-CO-Alkyl, NH-CO-Aryl, $OC_1$-$C_4$-Alkyl oder 0-Aryl
- $R_3$ = H, gegebenenfalls substituiertes $C_1$-$C_4$-Alkyl,
- Y = gegebenenfalls substituiertes $C_1$-$C_6$-Alkyl, $C_5$-$C_6$-Cycloalkyl oder Aryl
- Q = H, $SO_3H$, COOH, $SO_2$-$R_4$, $SO_2$-NH-$SO_2$-$R_4$,

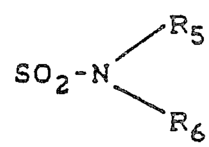 , 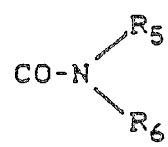

- $R_4$ = gegebenenfalls substituiertes $C_1$-$C_6$-Alkyl, Aralkyl oder Aryl
- $R_5$, $R_6$ = H, gegebenenfalls substituiertes $C_1$-$C_6$-Alkyl, Aralkyl oder Aryl

mit der Maßgabe, daß mindestens einer der Reste $R_3$, Y, Q eine wasserlöslichmachende Gruppe wie $SO_3H$, COOH, $OSO_3H$, $SO_2NH_2$, $SO_2$-NH-$SO_2$-$R_4$ oder eine stark polare Gruppe mit der Teilstruktur $SO_2$-$R_4$ oder

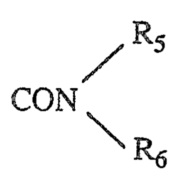

enthält oder darstellt, dadurch gekennzeichnet, daß man den Ringschluß in wasserhaltiger, 70 - 99%iger Schwefelsäure in Gegenwart von 2 Mol Mangandioxid pro Mol Ausgangsverbindung als Oxidationsmittel bei Temperaturen zwischen - 10° C und + 25° C durchführt.

Das Mangandioxid wird im allgemeinen in Form von Braunstein eingesetzt.

Es ist seit langem bekannt, das man Verbindung des Typs

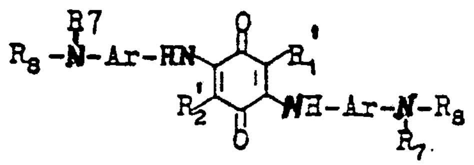

(III)

worin

| | |
|---|---|
| $R_1'$, $R_2'$ | = H, Halogen |
| Ar | = Arylenrest |
| $R_7$ | = H, Alkyl |
| $R_8$ | = Aryl |

durch Erhitzen in hochsiedenden organischen Lösungsmitteln in Gegenwart oder Abwesenheit von aromatischen Säurehalogeniden, Metallchloriden und/oder Oxydationsmitteln in Dioxazine überführen kann (Deutsche Patentschriften 517 194, 600 102, 637 020; Friedl- Fortschritte der Teerfarbenfabrikation, Band 17, 942; 21, 796; 23, 710). Dieses Verfahren ist im allgemeinen nicht anwendbar bei solchen Verbindungen der Formel (I), in denen die Substituenten Y, Q, $R_3$-$R_6$ wasserlöslichmachende Gruppen enthalten wie $SO_3H$, COOH, $OSO_3H$, $SO_2$-NH-$SO_2$-Alkyl oder -Aryl, $SO_2$-$NH_2$.

Gemäß FR -A-898 585 kann man Benzochinon-Derivate, die keine Sulfogruppen enthalten in Dioxazine überführen, wenn man diese in einem hochsiedenden Lösungsmittel erhitzt, also bei hoher Temperatur arbeitet. Weiterhin wird es als vorteilhaft bezeichnet, ein Oxidationsmittel wie Nitrobenzol zuzusetzen. Als weiteres mögliches Oxidationsmittel wird. u.a. Mangandioxid genannt (ohne Angabe der einzusetzenden Molmenge). Als Kondensationsreagenz kann auch Schwefelsäure verwendet werden, welche außerdem Schwefelsäureanhydrid enthalten kann, wodurch in das Molekül gleichzeitig auch Sulfogruppen eingeführt werden.

Es ist weiterhin bekannt, daß man Diarylaminobenzochinone der Formel

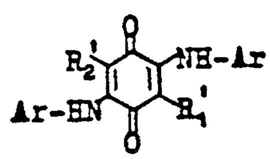

(IV)

worin

| | |
|---|---|
| $R_1'$, $R_2'$ | = H, Halogen |
| Ar | = einwertiger aromatischer Rest eines Benzols, Naphthalins, Anthracens, Diphenylamins, Carbazols usw. |

auch durch Erhitzen in Monohydrat oder Oleum gegebenenfalls unter Zusatz von Oxidationsmitteln wie Braunstein, Permanganat, Arsensäure, Peroxodisulfat (Deutsche Patentschrift 616 661; Friedl. Fortschritte der Teerfarbenfabrikation, Band 20, 1043) in Dioxazine überführen kann, wobei unter den Ringschlußbedingungen Sulfonierung zu wasserlöslichen Dioxazinen eintritt.

Es ist außerdem bekannt, daß man sulfonsäuregruppenhaltige Diarylaminobenzochinone der Formel (I) mit Q = $SO_3H$ ebenfalls in Oleum bei Temperaturen von 20-95° zu Dioxazinen ringschließen kann (Schweizerische Patentschrift 308 489, Deutsche Auslegeschrift 1 024 652, Britische Patentschrift 457 555, Deutsche Offenlegungsschriften 2 122 262, 2 302 382, 2 344 781, 2 503 611, 2 823 828), wobei teilweise weitere Sulfonsäuregruppen in das Dioxazin eingeführt werden können.

Das Verfahren des Ringschlußes in Oleum erfordert in vielen Fällen so energische Bedingungen, daß bei seiner Anwendung zur Herstellung von Verbindungen der Formel (II) abhängig von der Art der Substituenten unerwünschte Nebenreaktionen auftreten, die zu unsauberen Produkten führen, oder eine Herstellung von Produkten der Formel (II) überhaupt unmöglich ist. Zu den beobachteten Nebenraktionen gehören oxidative Abbaureaktionen. Insbesondere ist das Verfahren vor allem nicht anwendbar, wenn in Verbindungen der Formel (I) funktionelle Gruppen vorhanden sind, die unter den notwendigen Temperatur- und Konzentrationsbedingungen des Ringschlußes in Oleum unerwünschte irreversible Veränderungen erleiden können wie intra- oder intermolekulare Dehydratisierungen bzw. Kondensationen, Hydrolyse, oxydativer Abbau.

Das Verfahren ist in vielen Fällen auch nicht anwendbar, wenn in Verbindungen der Formel (I) $R_3$, Y, Q leicht sulfonierbare Substituenten enthalten, die Einführung zusätzlicher Sulfonsäuregruppen im Laufe der Ringschlußreaktion oder beim Lösen der Verbindungen der Formel (I) in Oleum aber unerwünscht ist.

Das erfindungsgemäße Verfahren weist diese Nachteile nicht auf.

Beispiel 1

15,0 g eines Produktes der Formel,

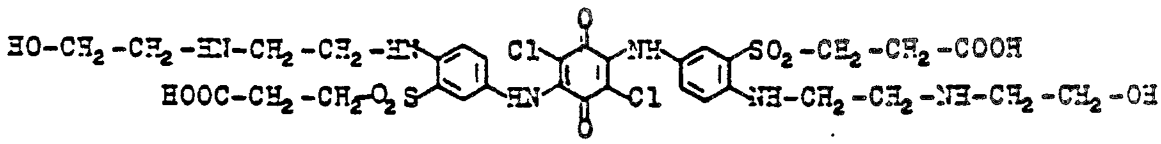

hergestellt durch Kondensation von 3-[2-(2-(N-β-Hydroxyethyl)-aminoethyl)-amino-5-amino-phenylsulfonyl]-propionsäure mit 2,3,5,6-Tetrachlorchinon, werden bei 0-5° langsam in 80 g 90 %ige Schwefelsäure eingetragen. Nach völligem Lösen trägt man in die olivgrüne Lösung langsam 3,6 g Braunstein mit einem wirksamen Gehalt von 88 % $MnO_2$ ein. Man rührt das Reaktionsgemisch eine Stunde bei 0-5° und eine weitere Stunde bei 20-25° nach. Die Farbe des Reaktionsgemisches ist von olivgrün nach violett umgeschlagen. Man gibt die violette Lösung in 800 g Eis-Wasser, saugt das ausgefallene Produkt ab, wäscht den Filterkuchen mit Wasser bis zur schwach sauren (pH 3-3,5) und sulfatfreien Reaktion und trocknet ihn bei 60° im Umluftschrank.

Man erhält 15,6 g einer Substanz der Formel

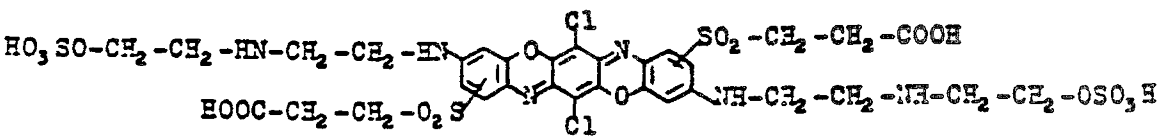

die sich in Wasser bei pH 7 mit klarer blauer Farbe löst.

Beispiel 2

15,0 g eines Produktes der Formel,

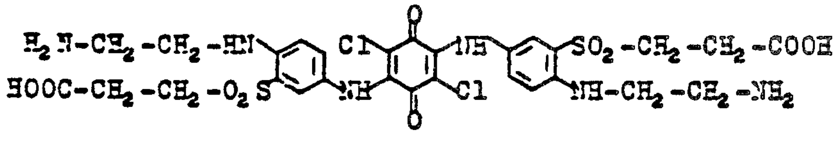

hergestellt durch Kondensation 3-[5-Amino-2-(aminoethyl)-aminophenylsulfonyl]-propionsäure mit 2,3,5,6-Tetrachlorchinon, werden bei 0-5° langsam in 70 g 90 %ige Schwefelsäure eingetragen. Man verrührt das Gemisch eine Stunde bis zur völligen Lösung. In die olivgrüne Lösung werden 4,0 g Braunstein mit einem wirksamen Gehalt von 88 % $MnO_2$ langsam eingetragen, wobei man die Temperatur weiter auf 0-5° hält. Die Farbe des Reaktionsgemisches schlägt allmählich von olivgrün nach blauviolett um. Man läßt noch eine Stunde bei 0-5° und anschließend eine Stunde bei 20-25° rühren und gibt dann die Lösung in 700 g Eis-Wasser. Das ausgefallene Produkt wird abgesaugt, mit Wasser schwefelsäurefrei gewaschen und im Umluftschrank bei 60° getrocknet.

Man erhält eine Substanz der Formel

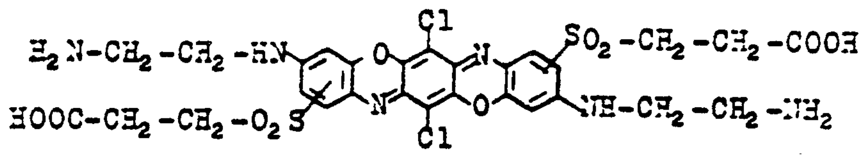

die sich in Wasser auf Zusatz von Natronlauge mit klarem Blauton löst.

Beispiel 3

10,0 g eines Chloranilkondensationsproduktes der Formel,

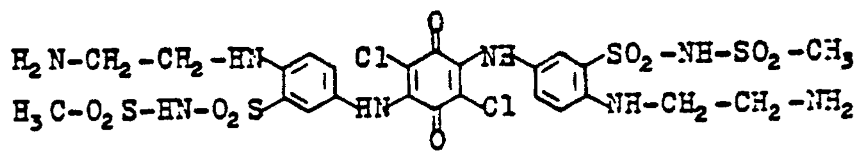

hergestellt durch Kondensation von 2,3,5,6-Tetrachlorchinon mit 5-Amino-2-(2-aminoethylamino)-phenylmethyldisulfimid, werden bei 0-5° im Laufe von 1 1/2 Stunden gleichmäßig in 80 g 90 %ige Schwefelsäure eingetragen. Wenn alles gelöst ist, gibt man gleichmäßig 2,6 g natürlichen Braunstein mit einem Gehalt von 2,28 g $MnO_2$rim Laufe von 30 Minuten bei 0-5° hinzu und rührt bei dieser Temperatur noch 2 Stunden nach. Man erwärmt die Mischung kurz auf 15° und trägt sie dann unter guter Durchmischung in 400 g Eis-Wasser ein, so daß die Temperatur nicht über 15-20° steigt. Der Niederschlag wird abgesaugt und mit verdünnter Natriumchloridlösung sulfatfrei gewaschen. Man erhält einen blauen Farbkörper der Formel

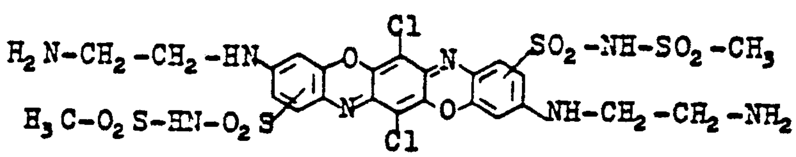

der keine durch Hydrolyse der Disulfimid-Funktionen entstandenen Produkte enthält und sich in Wasser bei pH-Werten > 9 mit blauer Farbe löst.

Beispiel 4

Trägt man 15 g des aus 2,3,5,6-Tetrachlorchinon und 5-Amino-2-(aminoethylamino)-phenyl-benzylsulfon in Molverhältnis 1:2 erhaltenen Kondensationsproduktes in 90 g 88 %ige Schwefelsäure bei 0-5° ein und oxidiert unter Kühlung mit 3,9 g natürlichem Braunstein mit einem wirksamen Gehalt von 3,4 g $MnO_2$, so erhält man nach Aufarbeitung mit Eis-Wasser ein blaues Produkt der Formel

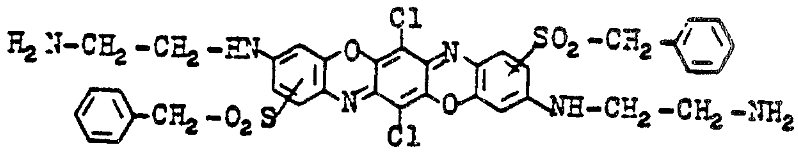

das in verdünnten Säuren mit blauer Farbe löslich ist.

Beispiel 5

Trägt man 15,0 g des aus 2,3,5,6-Tetrachlorchinon und 4-Amino-4'-methoxydiphenylamin-2-sulfonsäure im Molverhältnis 1:2 erhaltenen Kondensationsproduktes bei 0-5° in 90 g 86 %iger Schwefelsäure ein und oxidiert unter Kühlung mit 3,9 g Braunstein, der einen wirksamen Gehalt von 88 % $MnO_2$ aufweist, so erhält man nach Aufarbeitung in Eis-Wasser einen Farbstoff der Formel

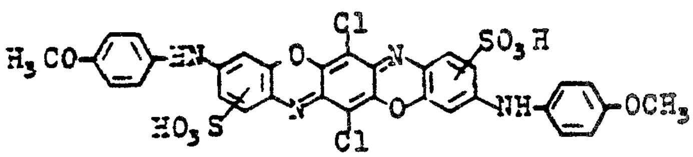

der sich in Wasser neutral oder schwach alkalisch mit blauer Farbe löst und in dem im Gegensatz zu den bekannten Ringschlußverfahren in Oleum die Anisidinreste frei von zusätzlichen Sulfonsäuregruppen sind.

Beispiel 6

15,0 g des Kondensationsproduktes aus 2,3,5,6-Tetrachlorchinon und 5-Amino-2-(2-hydroxyethyl)-aminophenyl-2-hydroxyethylsulfon im Molverhältnis 1:2 werden in 80 g 99 %iger Schwefelsäure bei 0-5° eingetragen. Nach Lösen setzt man zu der Mischung 4,5 g Braunstein mit einem wirksamen Gehalt von 88 % $MnO_2$ im Laufe von 45 Minuten unter weiterer Kühlung zu. Man rührt bis zur Beendigung der Reaktion nach und gießt die blaue Mischung auf Eis-Wasser. Aus der Lösung läßt sich der erhaltene Farbstoff der Formel

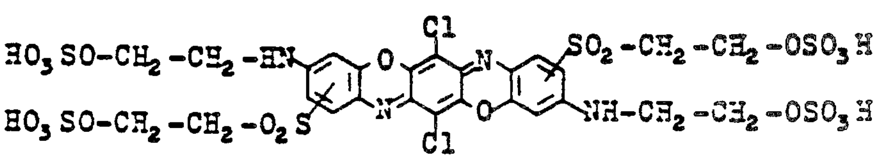

mit Kaliumchlorid aussalzen. Man erhält ein in Wasser mit klarer blauer Farbe lösliches Produkt.

**Ansprüche**

1. Verfahren zur Herstellung von Triphendioxazinen (II) durch oxidativen Ringschluß von 2,5-Diarylamino-1,4-benzochinonen der Formel (I)

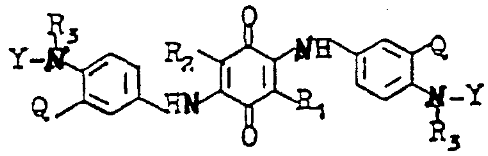

(I)

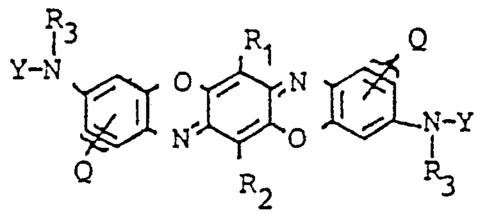

(II)

worin

| | |
|---|---|
| $R_1$, $R_2$ | = H, Halogen, gegebenenfalls substituiertes $C_1$-$C_4$-Alkyl, NH-CO-Alkyl, NH-CO-Aryl, $OC_1$-$C_4$-Alkyl oder O-Aryl |
| $R_3$ | = H, gegebenenfalls substituiertes $C_1$-$C_4$-Alkyl, |
| Y | = gegebenenfalls substituiertes $C_1$-$C_6$-Alkyl, $C_5$-$C_6$-Cycloalkyl oder Aryl, |
| Q | = H, $SO_3H$, COOH, $SO_2$-$R_4$, $SO_2$-NH-$SO_2$-$R_4$, |

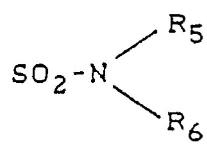

,

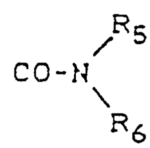

| | |
|---|---|
| $R_4$ | = gegebenenfalls substituiertes $C_1$-$C_6$-Alkyl, Aralkyl oder Aryl |
| $R_5$, $R_6$ | = H, gegebenenfalls substituiertes $C_1$-$C_6$-Alkyl, Aralkyl oder Aryl |

mit der Maßgabe, daß mindestens einer der Reste $R_3$, Y, Q eine wasserlöslich machende Gruppe wie $SO_3H$, COOH, $OSO_3H$, $SO_2NH_2$, $SO_2$-NH-$SO_2$-$R_4$ oder eine stark polare Gruppe mit der Teilstruktur $SO_2$-$R_4$ oder

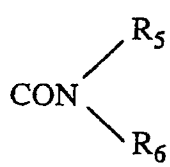

enthält oder darstellt,

dadurch gekennzeichnet, daß man den Ringschluß in wasserhaltiger, 70 - 99%iger Schwefelsäure in Gegenwart von 2 Mol Mangandioxid pro Mol Ausgangsverbindung bei Temperaturen zwischen - 10 °C und +25 °C durchführt.

## Claims

1. Process for preparing triphendioxazines (II) by oxidative ring closure of 2,5-diarylamino-1,4-benzoquinones of the formula (I)

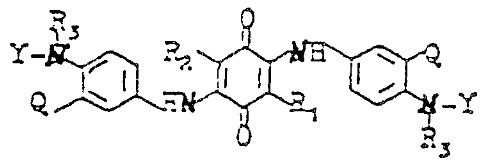

(I)

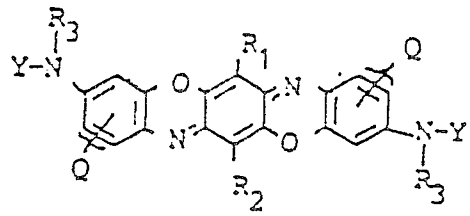

(II)

wherein

| | |
|---|---|
| $R_1$, $R_2$ | = H, halogen, optionally substituted $C_1$-$C_4$-alkyl, NH-CO-alkyl, NH-CO-aryl, $OC_1$-$C_4$-alkyl or O-aryl |
| $R_3$ | = H, optionally substituted $C_1$-$C_4$-alkyl, |
| Y | = optionally substituted $C_1$-$C_6$-alkyl, $c_5$-$c_6$-cycloalkyl or aryl, |
| Q | = H, $SO_3H$, COOH, $SO_2$-$R_4$, $SO_2$-NH-$SO_2$-$R_4$, |

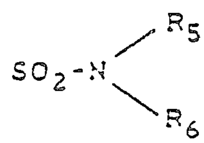

,

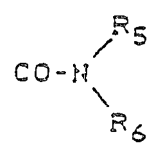

| | |
|---|---|
| $R_4$ | = optionally substituted $C_1$-$C_6$-alkyl, aralkyl or aryl |
| $R_5$, $R_6$ | = H, optionally substituted $C_1$-$C_6$-alkyl, aralkyl or aryl |

with the proviso that at least one of the radicals $R_3$ Y, Q contains or represents a water-solubilising group such as $SO_3H$, COOH, $OSO_3H$, $SO_2NH_2$, $SO_2$-NH-$SO_2$-$R_4$ or a strongly polar group of the structure $SO_2$-$R_4$ or

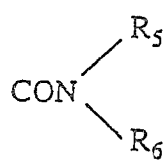

characterised in that the ring closure is carried out in aqueous, 70 - 99% strength sulphuric acid in the presence of 2 mol of manganese dioxide per mole of starting compound at temperatures between -10° C and +25° C.

## Revendications

**1.** Procédé de production de triphénodioxazines (II) par cyclisation par oxydation de 2,5-diarylamino-1,4-benzoquinones de formule (I)

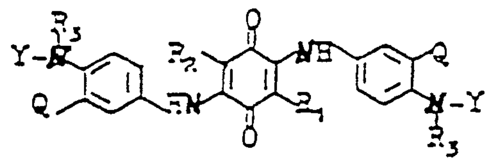 (I)

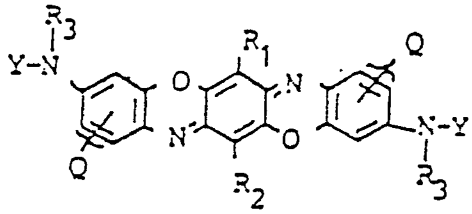 (II)

dans laquelle

R1, R2 représentent H, un halogène, un groupe alkyle en $C_1$ à $C_4$ éventuellement substitué, NH-CO-alkyle, NH-CO-aryle, O-(alkyle en $C_1$ à $C_4$) ou O-aryle,

$R_3$ représente H, un groupe alkyle en $C_1$ à $C_4$ éventuellement substitué,

Y est un groupe alkyle en $C_1$ à $C_6$, cycloalkyle en $C_5$ ou $C_6$ ou aryle, éventuellement substitué,

Q représente H, $SO_3H$, COOH, $SO_2$-$R_4$, $SO_2$-NH-$SO_2$-$R_4$,

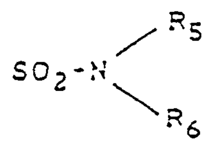 , 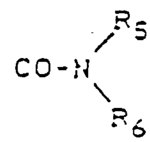

$R_4$ est un groupe alkyle en $C_1$ à $C_6$ éventuellement substitué, aralkyle ou aryle

$R_5$, $R_6$ représentent H, un groupe alkyle en $C_1$ à $C_6$ éventuellement substitué, aralkyle ou aryle,

sous réserve qu'au moins l'un des restes $R_3$, Y, Q contienne ou représente un groupe hydrosolubilisant tel que $SO_3H$, COOH, $OSO_3H$, $SO_2NH_2$, $SO_2$-NH-$SO_2$-$R_4$ ou un groupe fortement polaire de structure partielle $SO_2$-$R_4$ ou

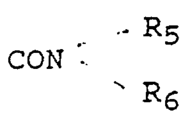 ,

caractérisé en ce qu'on conduit la cyclisation dans de l'acide sulfurique aqueux à 70 - 99 % en présence de 2 moles de dioxyde de manganèse par mole de composés de départ à des températures comprises entre -10° C et +25° C.